# EUROPÄISCHE PATENTANMELDUNG

(11) **EP 4 495 466 A1**
(43) Veröffentlichungstag der Anmeldung: **22.01.2025**
(21) Anmeldenummer: 23185848.1
(22) Anmeldetag: 17.07.2023
(51) Int. Cl.: F16K 27/02, F16K 31/60, F16K 1/04, E03D 1/30

(54) **ABSPERRVENTIL**

(71) Anmelder: Geberit International AG, 8645 Jona (CH)
(72) Erfinder: ZWICKER, Maurus, 8733 Eschenbach (CH); BOTT, Enrico, 8717 Benken (CH)
(74) Vertreter: Frischknecht, Harry Ralph

(57) **Zusammenfassung**

Ein Absperrventil (1), insbesondere ein Eckventil, umfasst
ein Ventilgehäuse (2) mit einem Wasserführungskanal (3), der einen Eingang (4) und einen Ausgang (5) aufweist und mit einem vom Ventilgehäuse (2) wegragenden, den Ausgang (5) bereitstellenden Anschlussstutzen (6),
einen Ventilstössel (7), der mit einem im Wasserführungskanal (3) angeordneten Ventilsitz (8) zusammenarbeitet, und
ein mit dem Ventilstössel (7) in fester, insbesondere drehfester, Verbindung stehendes Handrad (9), mit welchem der Ventilstössel (7) betätigbar ist,
wobei das Ventilgehäuse (2) zwei in einem Abstand parallel zueinander verlaufende Schlüsselflächen (10) aufweist, wobei jede der Schlüsselflächen (10) eine Schlüsselflächenebene (S) aufspannt, und
wobei das Handrad (9) und/oder der Anschlussstutzen (6) derart ausgebildet und angeordnet sind, dass das Handrad (9) und/oder der Anschlussstutzen (6) zwischen den beiden Schlüsselflächenebenen (S) liegen und diese nicht durchdringen.

## Beschreibung

### TECHNISCHES GEBIET

Die vorliegende Erfindung betrifft ein Absperrventil nach dem Oberbegriff von Anspruch 1.

### STAND DER TECHNIK

Aus dem Stand der Technik sind Absperrventile für den Einbau in Spülkästen bekannt. Solche Absperrventile dienen der Verbindung von einer hausseitigen Wasserleitung und einem Füllventil. Beispielsweise offenbart die EP 2 837 861 ein derartiges Absperrventil.

Die Absperrventile weisen typischerweise ein Handrad und einen Anschlussstutzen auf. Bei der Montage nehmen die Installateure meist ein Werkzeug zur Hand, um das Absperrventil an das Rohrleitungssystem anzuschliessen. Nicht selten kommt es bei unsachgemässer Anwendung zu Defekten. Beispielsweise kann das Handrad oder der Anschlussstutzen bei Kraftanwendung über das Werkzeug stark deformiert werden, was unter Umständen dazu führen kann, dass das Absperrventil nicht mehr definitionsgemäss funktioniert und ersetzt werden muss.

### DARSTELLUNG DER ERFINDUNG

Ausgehend von diesem Stand der Technik liegt der vorliegenden Erfindung eine Aufgabe zugrunde, ein Absperrventil anzugeben, welches die Nachteile des Standes der Technik überwindet. Insbesondere liegt der vorliegenden Erfindung eine Aufgabe zugrunde, ein Absperrventil anzugeben, welches prozesssicherer installiert werden kann.

Diese und andere Aufgaben löst das Absperrventil nach Anspruch 1. Demgemäss umfasst ein Absperrventil
- ein Ventilgehäuse mit einem Wasserführungskanal, der einen Eingang und einen Ausgang aufweist und mit einem vom Ventilgehäuse wegragenden, den Ausgang bereitstellenden Anschlussstutzen,
- einen Ventilstössel, der mit einem im Wasserführungskanal angeordneten Ventilsitz zusammenarbeitet, und
- ein mit dem Ventilstössel in fester, insbesondere drehfester, Verbindung stehendes Handrad, mit welchem der Ventilstössel betätigbar ist.

Das Ventilgehäuse weist zwei in einem Abstand parallel zueinander verlaufende Schlüsselflächen auf. Jede der Schlüsselflächen spannt eine Schlüsselflächenebene auf. Das Handrad und/oder der Anschlussstutzen sind derart ausgebildet und angeordnet, dass das Handrad und/oder der Anschlussstutzen zwischen den beiden Schlüsselflächenebenen liegen und diese nicht durchdringen.

Diese Anordnung vom Handrad und/oder vom Anschlussstutzen weist den Vorteil auf, dass bei der Montage des Ventils an das Rohrleitungssystem das Absperrventil mit einem zangenartigen Werkzeug, wie mit einem Gabelschlüssel, einem Rollgabelschlüssel, einem Schraubstock oder einer Rohrzange, an den Schlüsselflächen ergriffen werden kann und dass aufgrund der beschriebenen Anordnung zwischen den Schlüsselflächenebenen das Handrad und/oder der Anschlussstutzen nicht im Wirkbereich des Werkzeugs liegen. Somit wird sichergestellt, dass das Handrad und/oder der Anschlussstutzen bei der Montage des Absperrventils nicht durch das Werkzeug zerstört werden bzw. einen Defekt erleiden.

Der Ventilstössel weist einen Dichtabschnitt auf, welcher in einer Verschlusslage auf dem Ventilsitz aufliegt und welcher in einer Durchflusslage beabstandet zum Ventilsitz liegt. In der Verschlusslage ist der Wasserführungskanal verschlossen und es kann kein Wasser vom Eingang über den Ventilsitz zum Ausgang fliessen. In der Durchflusslage ist der Wasserführungskanal offen und es kann Wasser vom Eingang über den Ventilsitz zum Ausgang fliessen.

Der Ventilstössel ist vorzugsweise mit einem Aussengewinde in einem Innengewinde am Ventilgehäuse gelagert. Bei einer Drehbewegung des Handrads wird der Ventilstössel in der Gewindeaufnahme bewegt.

Vorzugsweise liegen der Anschlussstutzen und/oder das Handrad mittig zwischen den beiden Schlüsselflächenebenen.

Vorzugsweise ist das Absperrventil als Eckventil ausgebildet.

In einer Variante weist das Handrad unter der Massgabe, dass dieses sich nicht durch die beiden Schlüsselebenen erstreckt, bevorzugt einen Durchmesser auf, der möglichst gross ausgebildet ist.

In einer anderen Variante weist das Handrad bevorzugt einen Durchmesser auf, welcher höchstens 100% oder 98% des Abstands der beiden Schlüsselflächen ist, und/oder welcher mindestens 80% oder 85% oder 90% des Abstands der beiden Schlüsselflächen ist.

Das Handrad ist bei beiden Varianten bezüglich seines Durchmessers optimiert, so dass es von Hand gut ergriffen und betätigt werden kann.

Der Durchmesser des Handrads entspricht der maximalen radialen Ausdehnung des Handrads quer zu seiner Mittelachse. Die Mittelachse des Handrads verläuft parallel zu den beiden Schlüsselflächen und zu den beiden Schlüsselflächenebenen.

Der Abstand zwischen den beiden Schlüsselflächen bzw. den beiden Schlüsselflächenebenen ist der Abstand in rechtwinkliger Richtung zu den beiden Schlüsselflächen bzw. Schlüsselflächenebenen. Der Abstand definiert zugleich die Schlüsselweite für die Schlüsselflächen bzw. die Schlüsselflächenebenen.

Vorzugsweise stehen die Schlüsselflächen in einem Abstand von 17 Millimeter, oder 19 Millimeter oder 22 Millimeter oder 24 Millimeter zueinander.

Vorzugsweise sind die Schlüsselflächen mit Einbuchtungen versehen. Die Einbuchtungen weisen den Vorteil auf, dass die Wand der Schlüsselflächen mechanisch verstärkt werden. Zudem kann der Materialanteil reduziert werden. Ebenfalls können andere Flächen, die das Ventilgehäuse nach aussen hin begrenzen, mit Einbuchtungen versehen sein. Alternativerweise sind die Schlüsselflächen als ebene Flächen ausgebildet.

Vorzugsweise weist der Wasserführungskanal einen sich vom Eingang weg ersteckenden ersten Kanalabschnitt auf, der sich entlang einer ersten Mittelachse erstreckt. Weiter weist der Wasserführungskanal einen sich zum Ausgang hin erstreckenden zweiten Kanalabschnitt auf, der sich entlang einer zweiten Mittelachse erstreckt. Die beiden Mittelachsen stehen in einem Winkel (α, alpha) winklig geneigt zueinander. Der Winkel (α, alpha) liegt vorzugsweise im Bereich von 45° bis 135°, insbesondere bei 90°.

Vorzugsweise liegen die beiden Mittelachsen in einer gemeinsamen Mittelachsenebene bzw. spannen eine gemeinsame Mittelachsenebene auf. Die Mittelachsenebene liegt mittig zwischen den beiden Schlüsselflächenebenen bzw. mittig zwischen den beiden Schlüsselflächen.

Vorzugsweise ragt der Anschlussstutzen von einer seitlichen Wand des Ventilgehäuses ab, welche seitliche Wand die beiden Schlüsselflächen verbindet.

Vorzugsweise ragt das Handrad von einer oberen Wand des Ventilgehäuses ab, welche obere Wand die beiden Schlüsselflächen verbindet.

Vorzugsweise verläuft die seitliche Wand, von welcher der Anschlussstutzen abragt, im Wesentlichen rechtwinklig zur oberen Wand, von welcher das Handrad abragt. Die obere Wand steht vorzugsweise rechtwinklig zu den beiden Schlüsselflächen.

Vorzugsweise sind die beiden Schlüsselflächen gegenüber dem Anschlussstutzen mit einer weiteren seitlichen Wand verbunden, wobei die weitere seitliche Wand mit einer Rundung gerundet ausgebildet ist. Die Rundung liegt demnach gegenüber dem Anschlussstutzen. Durch die Rundung wird sichergestellt, dass ein Werkzeug nicht angesetzt werden kann bzw. dass dem Installateur signalisiert wird, dass an dieser Wand kein oben genanntes Werkzeug anzusetzen ist. Sollte der Installateur wider Erwarten das Werkzeug dennoch ansetzen wollen, wird dieses aufgrund der Rundung abrutschen.

Vorzugsweise stellt die Rundung einen Teilbereich eines imaginären Hüllzylinders bereit, wobei das Handrad den Hüllzylinder nicht durchdringt. Der Hüllzylinder erstreckt sich von der einen Schlüsselebene zu der anderen Schlüsselebene.

Vorzugsweise weist das Handrad aussenseitig eine haptische Griffstruktur auf, welche ein werkzeugloses Ergreifen und Betätigen des Handrads erlaubt. Die haptische Griffstruktur kann beispielsweise durch Erhebungen und benachbarte Rillen geschaffen werden. Die haptische Griffstruktur liegt ebenfalls zwischen den beiden Schlüsselflächenebenen.

Vorzugsweise liegt das Handrad ausserhalb des Ventilgehäuses.

Vorzugsweise schliesst sich den Schlüsselflächen jeweils ein Flächenabschnitt an. Die Flächenabschnitte verlaufen winklig geneigt zu den Schlüsselflächen, wobei die winklige Neigung der Flächenabschnitte derart ist, dass der Abstand zwischen den Flächenabschnitten mit zunehmender Entfernung von den Schlüsselflächen zunimmt.

Mit anderen Worten gesagt, liegen die Flächenabschnitte nicht zwischen den beiden Schlüsselflächenebenen, sondern ausserhalb der beiden Schlüsselflächenebenen. Die Flächenabschnitte können aufgrund ihrer winkligen Lage zueinander nicht mehr durch ein Werkzeug ergriffen werden.

Die besagten Flächenabschnitte schliessen sich gegenüber dem Handrad an den Schlüsselflächen an.

Vorzugsweise weist das Ventilgehäuse einen Befestigungsabschnitt mit einem Flansch und einem sich dem Flansch anschliessenden Aussengewinde, auf welchem eine Mutter mit einem Innengewinde gelagert ist, auf.

Die Mutter kann zum Flansch hin bewegt werden, so dass im Zwischenraum zwischen Mutter und Flansch eine Klemmung bereitstellbar ist. Beispielsweise kann das Absperrventil zu einer Wandung eines Spülkastens geklemmt werden.

Vorzugsweise wird der Eingang durch einen weiteren Anschlussstutzen bereitgestellt.

Die Anschlussstutzen weisen vorzugsweise ein Anschlussstutzengewinde auf.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht eines Absperrventils gemäss einer bevorzugten Ausführungsform der vorliegenden Erfindung;
- Fig. 2: eine Schnittdarstellung des Absperrventils nach Figur 1;
- Fig. 3: eine Frontansicht des Absperrventils nach den vorhergehenden Figuren;
- Fig. 4: eine Seitenansicht des Absperrventils nach den vorhergehenden Figuren;

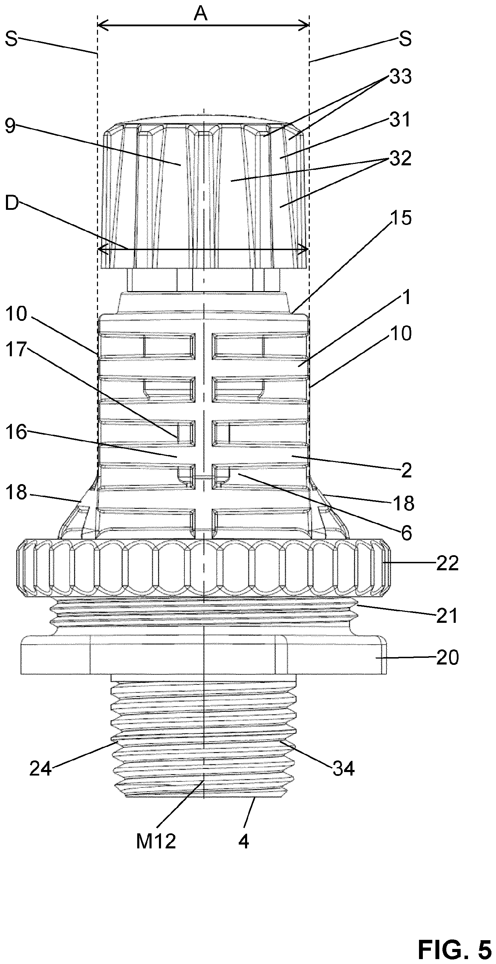

- Fig. 5: eine Rückansicht des Absperrventils nach den vorhergehenden Figuren; und
- Fig. 6: eine Draufsicht des Absperrventils nach den vorhergehenden Figuren.

### BESCHREIBUNG BEVORZUGTER AUSFÜHRUNGSFORMEN

In den Figuren wird ein Absperrventil 1, hier in der Form eines Eckventils, gemäss einer bevorzugten Ausführungsform der vorliegenden Erfindung gezeigt. Das Absperrventil wird typischerweise in einen Spülkasten eingesetzt und dient der Absperrung bzw. Freigabe der Wasserversorgung zu einem ebenfalls im Spülkasten angeordneten Füllventil.

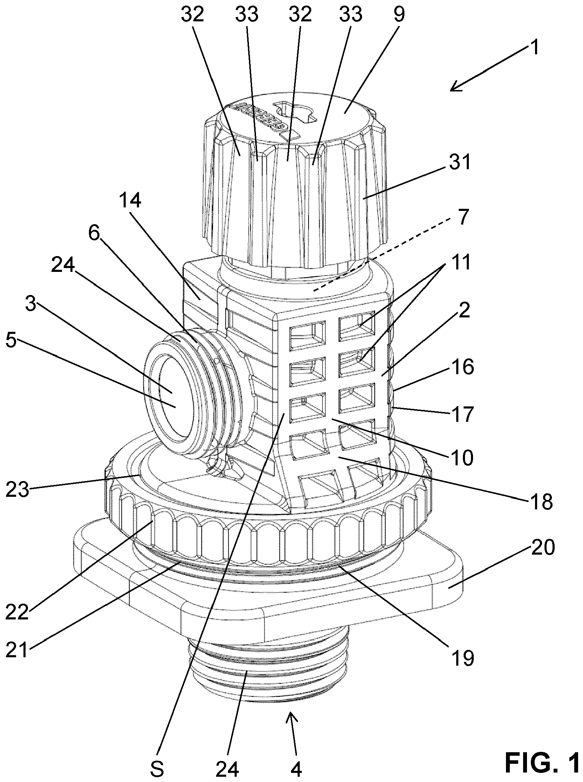

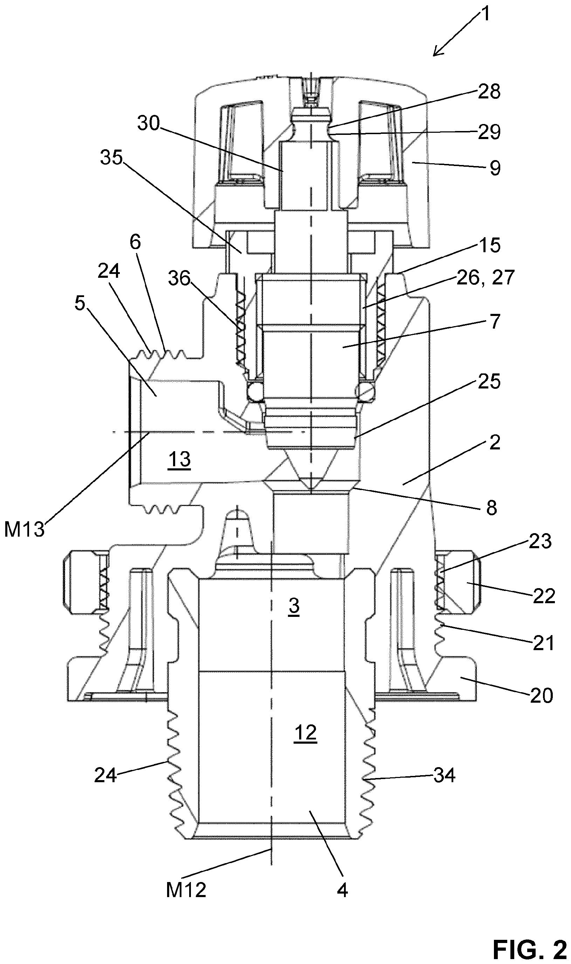

Von den Figuren 1 und 2 ist ersichtlich, dass das Absperrventil 1 ein Ventilgehäuse 2, einen Ventilstössel 7 und ein Handrad 9 umfasst. Der Ventilstössel 7 kann auch als Spindel bezeichnet werden.

Das Ventilgehäuse 2 umfasst einen Wasserführungskanal 3, der einen Eingang 4 und einen Ausgang 5 aufweist. Ferner ragt ein Anschlussstutzen 6, der einen Ausgang 5 bereitstellt, vom Ventilgehäuse 2 weg. Am Anschlussstutzen 6 kann ein Füllventil angeschlossen werden. Der Eingang 4 weist hier ebenfalls einen Anschlussstutzen 34 auf. Beide Anschlussstutzen 6, 34 weisen jeweils ein Anschlussstutzengewinde 24 auf.

Der Ventilstössel 7 arbeitet mit einem im Wasserführungskanal 3 angeordneten Ventilsitz 8 zusammen. Der Ventilstössel 7 ist dabei von einer Verschlusslage in eine Durchflusslage, so wie in der Figur 2 gezeigt, bewegbar. In der Verschlusslage liegt der Ventilstössel 7 mit einem Dichtabschnitt 25 dichtend auf dem Ventilsitz 8 auf. In der Durchflusslage liegt der Ventilstössel mit dem Dichtabschnitt 25 beabstandet zum Ventilsitz 8, derart dass Wasser durch den Wasserführungskanal 3 hindurchströmen kann. Der Ventilstössel 7 weist hier ein Aussengewinde 26 auf, welches in einem Innengewinde 27 im Ventilgehäuse 2 schraubbar gelagert ist. Das Aussengewinde 26 ist hier Teil einer Gewindebüchse 35, welche in das Ventilgehäuse 2 eingesetzt wird. Die Gewindebüchse 35 ist über eine Gewindestruktur 36 in das Ventilgehäuse 2 eingeschraubt. Die Gewindestruktur 36 weist eine andere Gangrichtung als das Aussengewinde 26 bzw. das Innengewinde 27 auf.

Der Ventilstössel 7 kann über das Handrad 9, welches drehfest mit dem Ventilstössel 7 in Verbindung steht, betätigt werden. Das Handrad 9 steht über einen Einrastabschnitt 28 mit einem Lagerabschnitt 29 des Ventilstössels 7 in axial fester Verbindung. Ferner weisen der Ventilstössel 7 und das Handrad 9 eine Drehübertragungsstruktur 30, hier eine Mehrkantstruktur bzw. eine Vierkantstruktur, auf, über welche eine drehfeste Verbindung bereitgestellt wird.

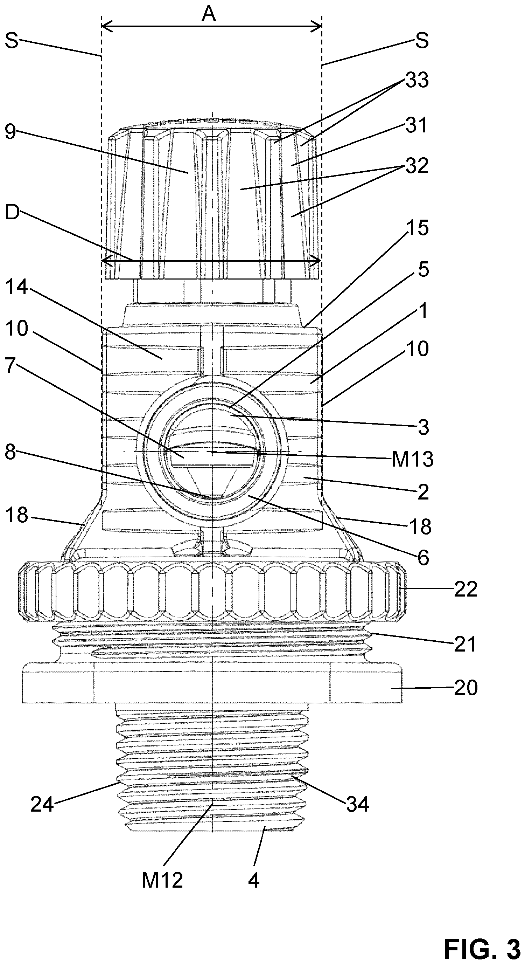

Von den Figuren ist weiterhin ersichtlich, dass das Ventilgehäuse 2 zwei in einem Abstand A parallel zueinander verlaufende Schlüsselflächen 10 aufweist. Die Schlüsselflächen 10 sind so ausgebildet, dass ein Werkzeug, wie beispielsweise ein Gabelschlüssel, ein Rollgabelschlüssel oder eine Rohrzange, an das Ventilgehäuse 2 angelegt werden kann. Jede der Schlüsselflächen 10 spannt eine Schlüsselflächenebene S auf. Das heisst, die Schlüsselfläche 10 ist Teil einer Schlüsselflächenebene S. Die Schlüsselflächenebenen S liegen ebenfalls im genannten Abstand A. Wie von der Figur 3 gezeigt, sind das Handrad 9 und der Anschlussstutzen 6 derart ausgebildet und angeordnet, dass das Handrad 9 und der Anschlussstutzen 6 zwischen den beiden Schlüsselflächenebenen S liegen und diese nicht durchdringen. In anderen Ausführungsformen ist es denkbar, dass nur das Handrad 9 oder nur der Anschlussstutzen 6 zwischen den beiden Schlüsselflächenebenen S liegen. Die Schlüsselflächen 10 bilden hier mindestens teilweise eine Seitenwand des Ventilgehäuses.

Der Durchmesser D des Handrads 9 ist, wie von der Figur 3 gezeigt, möglichst gross gewählt. Dies unter der Massgabe, dass das Handrad 9 nicht die beiden Schlüsselflächenebenen S schneidet bzw. durchdringt. Das Handrad 9 kann beispielsweise einen Durchmesser D aufweisen, welcher höchstens 100% oder 98% des Abstands A der beiden Schlüsselflächen ist, und/oder welcher mindestens 80% oder 85% oder 90% des Abstands A der beiden Schlüsselflächenebenen S ist.

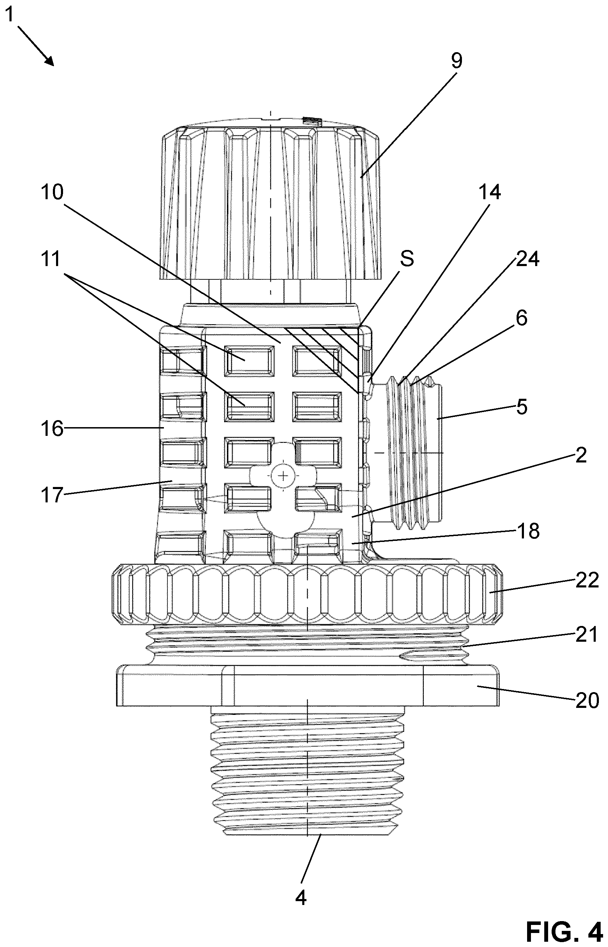

Die Schlüsselflächenebenen S bilden in der gezeigten Ausführungsform eine Verlängerung der Schlüsselflächen 10 in Richtung des Handrads 9 und in Richtung des Anschlussstutzens 6. Sowohl das Handrad 9 als auch der Anschlussstutzen 6 liegen, in Richtung der Flächennormalen auf die Schlüsselflächen 10 gesehen, beabstandet zu den Schlüsselflächen 10. Es wird auf die Figur 4 verwiesen, wo dies ersichtlich ist.

Die Schlüsselflächen 10 stehen in einem Abstand A von 17 Millimeter, oder 19 Millimeter oder 22 Millimeter oder 24 Millimeter zueinander. Der Abstand ist vorzugsweise so gewählt, dass die Schlüsselflächen 10 mit einem Standardgabelschlüssel ergriffen werden können.

In der gezeigten Ausführungsform sind die Schlüsselflächen 10 mit Einbuchtungen 11 versehen. Ebenfalls können andere Seitenflächen des Ventilgehäuses 2 derartige Einbuchtungen 11 aufweisen. Die Einbuchtungen 11 dienen der mechanischen Verstärkung der jeweiligen Wandbereiche. Ferner dienen die Einbuchtungen 11 der Reduktion des Materialbedarfs und verhindern die Bildung von Einfallstellen, die beim Spritzgiessen entstehen könnten.

Von den Figuren, insbesondere von der Figur 2, ist ersichtlich, dass der Wasserführungskanal 3 einen sich vom Eingang 4 weg ersteckenden ersten Kanalabschnitt 12 und einen sich zum Ausgang 5 hin erstreckenden zweiten Kanalabschnitt 13 aufweist. Der erste Kanalabschnitt 12 erstreckt sich entlang einer ersten Mittelachse M12 und der zweite Kanalabschnitt 13 erstreckt sich entlang einer zweiten Mittelachse M13. Die beiden Mittelachsen M12, M13 stehen in einem Winkel α, alpha winklig geneigt zueinander. Der Winkel α, alpha ist in der gezeigten Ausführungsform 90°. Ferner liegen die beiden Mittelachsen M12, M13 in einer gemeinsamen Mittelachsenebene E. Die Mittelachsenebene E liegt mittig zwischen den beiden Schlüsselflächenebenen S bzw. mittig zwischen den beiden Schlüsselflächen 10.

In der Folge wird nun die geometrische Anordnung von Handrad 9 und Anschlussstutzen 6 genauer erläutert.

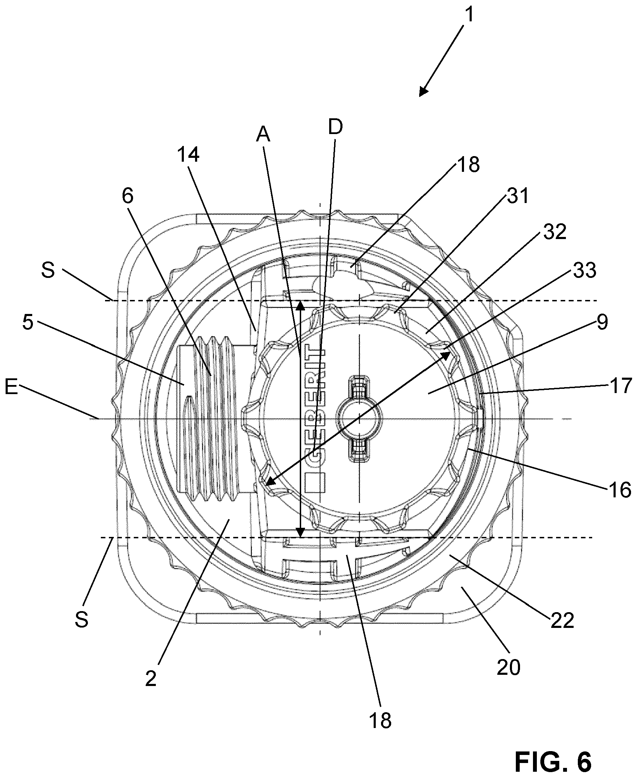

Der Anschlussstutzen 6 ragt von einer seitlichen Wand 14 des Ventilgehäuses 2 ab. Die seitliche Wand 14 verbindet dabei die beiden Schlüsselflächen 10. Gegenüber der seitlichen Wand 14 verbindet eine weitere seitliche Wand 16 die beiden Schlüsselflächen 10. Von der Figur 6 ist ersichtlich, dass diese weitere seitliche Wand 16 mit einer Rundung 17 gerundet ausgebildet ist. Die Rundung 17 ist dabei derart, dass die Rundung 17 einen Teilbereich eines imaginären Hüllzylinders bereitstellt. Das Handrad 9 ist bezüglich dieses Hüllzylinders so dimensioniert, dass diese den Hüllzylinder nicht durchdringt. Das heisst, das Handrad 9 liegt in einem Raumbereich, welcher durch den Hüllzylinder und die beiden Schlüsselflächenebene E aufgespannt wird. Die Rundung 17 weist den Vorteil auf, dass ein Werkzeug bei der Rundung 17 nicht ansetzbar ist.

Das Handrad 9 ragt von einer oberen Wand 15 des Ventilgehäuses 2 ab. Die obere Wand 15 verbindet die beiden Schlüsselflächen 10 miteinander. Hier verbindet die obere Wand 15 auch die seitlichen Wände 14, 16.

Von der Seitenansicht der Figur 3 ist ersichtlich, dass sich den Schlüsselflächen 10 jeweils ein Flächenabschnitt 18 anschliesst, welcher winklig geneigt zu den Schlüsselflächen 10 verläuft. Die winklige Neigung der Flächenabschnitte 18 ist derart, dass der Abstand zwischen den Flächenabschnitten 18 mit zunehmender Entfernung von den Schlüsselflächen zunimmt. Das heisst, das Ventilgehäuse vergrössert seinen Querschnitt im Bereich der Flächenabschnitte 18 im Vergleich zu den Schlüsselflächen 10.

Unterhalb der Flächenabschnitte 18 weist das Ventilgehäuse 2 einen Befestigungsabschnitt 19 mit einem Flansch 20 und einem sich dem Flansch 20 anschliessenden Aussengewinde 21 auf. Eine Mutter 22 ist mit einem Innengewinde 23 auf dem Aussengewinde 21 gelagert. Zwischen dem Flansch 20 und der Mutter 22 kann ein Teilbereich einer Spülkastenwand eingeklemmt werden.

Von der Figur 1 kann weiterhin erkannt werden, dass das Handrad 9 eine haptische Griffstruktur 31 aufweist. Die haptische Griffstruktur 31 wird hier durch sich um den Umfang verteilt und abwechslungsweise angeordnete Rillen 32 und Erhebungen 33 bereitgestellt.

### BEZUGSZEICHENLISTE

| | | | |
|---|---|---|---|
| 1 | Ventil | 32 | Rille |
| 2 | Ventilgehäuse | 33 | Erhebung |
| 3 | Wasserführungskanal | 34 | weiterer Anschlussstutzen |
| 4 | Eingang | 35 | Gewindebüchse |
| 5 | Ausgang | 36 | Gewindestruktur |
| 6 | Anschlussstutzen | A | Abstand |
| 7 | Ventilstössel | E | Mittelachsenebene |
| 8 | Ventilsitz | M12 | erste Mittelachse |
| 9 | Handrad | M13 | zweite Mittelachse |
| 10 | Schlüsselfläche | S | Schlüsselflächenebene |
| 11 | Einbuchtungen | | |
| 12 | erster Kanalabschnitt | | |
| 13 | zweiter Kanalabschnitt | | |
| 14 | seitliche Wand | | |
| 15 | obere Wand | | |
| 16 | weitere seitlichen Wand | | |
| 17 | Rundung | | |
| 18 | Flächenabschnitt | | |
| 19 | Befestigungsabschnitt | | |
| 20 | Flansch | | |
| 21 | Aussengewinde | | |
| 22 | Mutter | | |
| 23 | Innengewinde | | |
| 24 | Anschlussstutzengewinde | | |
| 25 | Dichtabschnitt | | |
| 26 | Aussengewinde Ventilstössel | | |
| 27 | Innengewinde Ventilgehäuse | | |
| 28 | Einrastabschnitt | | |
| 29 | Lagerabschnitt | | |
| 30 | Drehübertragungsstruktur | | |
| 31 | haptische Griffstruktur | | |

## Patentansprüche

1. Absperrventil (1), insbesondere ein Eckventil, umfassend
ein Ventilgehäuse (2) mit einem Wasserführungskanal (3), der einen Eingang (4) und einen Ausgang (5) aufweist und mit einem vom Ventilgehäuse (2) wegragenden, den Ausgang (5) bereitstellenden Anschlussstutzen (6),
einen Ventilstössel (7), der mit einem im Wasserführungskanal (3) angeordneten Ventilsitz (8) zusammenarbeitet, und
ein mit dem Ventilstössel (7) in fester, insbesondere drehfester, Verbindung stehendes Handrad (9), mit welchem der Ventilstössel (7) betätigbar ist,
**dadurch gekennzeichnet,**
**dass** das Ventilgehäuse (2) zwei in einem Abstand parallel zueinander verlaufende Schlüsselflächen (10) aufweist, wobei jede der Schlüsselflächen (10) eine Schlüsselflächenebene (S) aufspannt, und
**dass** das Handrad (9) und/oder der Anschlussstutzen (6) derart ausgebildet und angeordnet sind, dass das Handrad (9) und/oder der Anschlussstutzen (6) zwischen den beiden Schlüsselflächenebenen (S) liegen und diese nicht durchdringen.

2. Absperrventil (1) nach Anspruch 1, **dadurch gekennzeichnet,**
**dass** das Handrad (9) unter der Massgabe, dass dieses sich nicht durch die beiden Schlüsselflächenebenen (S) erstreckt, einen Durchmesser (D) aufweist, der möglichst gross ausgebildet ist; oder
**dass** das Handrad (9) einen Durchmesser (D) aufweist, welcher höchstens 100% oder 98% des Abstands (A) der beiden Schlüsselflächen ist, und/oder welcher mindestens 80% oder 85% oder 90% des Abstands (A) der beiden Schlüsselflächen ist.

3. Absperrventil (1) nach einem der vorhergehenden Ansprüche, **dadurch gekennzeichnet, dass** die Schlüsselflächen (10) in einem Abstand (A) von 17 Millimeter, oder 19 Millimeter oder 22 Millimeter oder 24 Millimeter zueinander stehen.

4. Absperrventil (1) nach einem der vorhergehenden Ansprüche, **dadurch gekennzeichnet, dass** die Schlüsselflächen (10) mit Einbuchtungen (11) versehen sind; oder dass die Schlüsselflächen als ebene Flächen ausgebildet sind.

5. Absperrventil (1) nach einem der vorhergehenden Ansprüche, **dadurch gekennzeichnet, dass** der Wasserführungskanal (3) einen sich vom Eingang (4) weg ersteckenden ersten Kanalabschnitt (12), der sich entlang einer ersten Mittelachse (M12), und einen sich zum Ausgang (5) hin erstreckenden zweiten Kanalabschnitt (13), der sich entlang einer zweiten Mittelachse (M13) erstreckt, aufweist, wobei die beiden Mittelachsen (M12, M13) in einem Winkel (α, alpha) winklig geneigt zueinander stehen.

6. Absperrventil (1) nach Anspruch 5, **dadurch gekennzeichnet, dass** die beiden Mittelachsen (M12, M13) in einer gemeinsamen Mittelachsenebene (E) liegen, wobei die Mittelachsenebene (E) mittig zwischen den beiden Schlüsselflächenebenen (S) bzw. mittig zwischen den beiden Schlüsselflächen (10) liegt.

7. Absperrventil (1) nach einem der vorhergehenden Ansprüche, **dadurch gekennzeichnet, dass** der Anschlussstutzen (6) von einer seitlichen Wand (14) des Ventilgehäuses (2) abragt, welche seitliche Wand (14) die beiden Schlüsselflächen (10) verbindet; und/oder dass das Handrad (9) von einer oberen Wand (15) des Ventilgehäuses (2) abragt, welche obere Wand (15) die beiden Schlüsselflächen (10) verbindet.

8. Absperrventil (1) nach Anspruch 7, **dadurch gekennzeichnet, dass** die seitliche Wand (14), von welcher der Anschlussstutzen (6) abragt, im Wesentlichen rechtwinklig zur oberen Wand (15), von welcher das Handrad (9) abragt, verläuft.

9. Absperrventil (1) nach einem der vorhergehenden Ansprüche, **dadurch gekennzeichnet, dass** die beiden Schlüsselflächen (10) gegenüber dem Anschlussstutzen (6) mit einer weiteren seitlichen Wand (16) verbunden sind, wobei die weitere seitliche Wand (16) mit einer Rundung (17) gerundet ausgebildet ist.

10. Absperrventil (1) nach Anspruch 9, **dadurch gekennzeichnet, dass** die Rundung (17) einen Teilbereich eines imaginären Hüllzylinders bereitstellt, wobei das Handrad (9) den Hüllzylinder nicht durchdringt.

11. Absperrventil (1) nach einem der vorhergehenden Ansprüche, **dadurch gekennzeichnet, dass** das Handrad (9) aussenseitig eine haptische Griffstruktur (31) aufweist, welche ein werkzeugloses Ergreifen und Betätigen des Handrads (9) erlaubt; und/oder dass das Handrad (9) ausserhalb des Ventilgehäuses (2) liegt.

12. Absperrventil (1) nach einem der vorhergehenden Ansprüche, **dadurch gekennzeichnet, dass** sich den Schlüsselflächen (10) jeweils ein Flächenabschnitt (18) anschliesst, welcher winklig geneigt zu den Schlüsselflächen (10) verläuft, wobei die winklige Neigung der Flächenabschnitte (18) derart ist, dass der Abstand zwischen den Flächenabschnitten (18) mit zunehmender Entfernung von den Schlüsselflächen zunimmt.

13. Absperrventil (1) nach einem der vorhergehenden Ansprüche, **dadurch gekennzeichnet, dass** das Ventilgehäuse (2) einen Befestigungsabschnitt (19) mit einem Flansch (20) und einem sich dem Flansch (20) anschliessenden Aussengewinde (21), auf welchem eine Mutter (22) mit einem Innengewinde (23) gelagert ist, aufweist.

14. Absperrventil (1) nach einem der vorhergehenden Ansprüche, **dadurch gekennzeichnet, dass** der Eingang durch einen weiteren Anschlussstutzen (34) bereitgestellt wird.
